# EUROPÄISCHE PATENTSCHRIFT

(11) **EP 2 946 901 B1**
(45) Veröffentlichungstag und Bekanntmachung des Hinweises auf die Patenterteilung: **26.12.2018**
(21) Anmeldenummer: 15168046.9
(22) Anmeldetag: 18.05.2015
(51) Int. Cl.: B29C 41/04, B29C 41/06, B29C 41/20, B29C 70/32, B29C 33/14

(54) **KUNSTSTOFFFORMTEIL UND VERFAHREN ZU SEINER HERSTELLUNG**
MOULDED PLASTIC ARTICLE AND METHOD FOR PRODUCING THE SAME
PIÈCE MOULÉE À BASE DE PLASTIQUE ET SON PROCÉDÉ DE FABRICATION

(30) Priorität: 19.05.2014 DE 102014106998
(43) Veröffentlichungstag der Anmeldung: 25.11.2015
(73) Patentinhaber: Elkamet Kunststofftechnik GmbH, 35216 Biedenkopf (DE)
(72) Erfinder: Emrich, Marco, 35327 Ulrichstein (DE)
(74) Vertreter: Keil & Schaafhausen Patent- und Rechtsanwälte PartGmbB

(56) Entgegenhaltungen:
- EP-A1- 0 030 027
- US-A- 3 610 457

## Beschreibung

Die Erfindung betrifft ein Verfahren zur Herstellung eines Formteils, insbesondere Behälters, aus Kunststoff durch Rotationsformen, wobei ein Kunststoffvorläufer des für das Kunststoffformteil vorgesehenen Kunststoffs in eine Rotationsschmelzform eingebracht wird, wobei der Kunststoffvorläufer als Schmelze in der Rotationsschmelzform vorliegt und unter Rotation der Rotationsschmelzform bei gleichzeitiger Formgebung auspolymerisiert. Ferner betrifft die Erfindung ein entsprechend hergestelltes Kunststoffformteil.

Kunststoffformteile werden in vielen Bereichen eingesetzt. Als Hohlkörper werden sie bspw. im Automobilbau als Kraftstoffbehälter oder als Tank für sonstige Flüssigkeiten verwendet. Wegen der verhältnismäßig einfachen Formgebung, des geringen Gewichts aber auch der Korrosionsbeständigkeit sind Kunststoffbehälter ein bevorzugtes Mittel, um Flüssigkeiten aufzubewahren. Von ihnen wird verlangt, dass sie mechanisch stabil sind, ein geringes Gewicht aufweisen und den restriktiver werdenden Forderungen nach einem effizienten Packaging im Fahrzeugbau entsprechen.

Üblicherweise werden die Kunststoffbehälter im Rotationsformverfahren mittels eines Rotationswerkzeugs hergestellt. Eine bekannte Form der Herstellung sieht vor, dass eine abgewogene Menge Kunststoffmaterials in Form von Pulver, Pellets oder Mikropellets oder dergleichen in eine hohle Form gegeben wird, deren Innenoberfläche die Außenfläche des Kunststoffbehälters definiert. Die Form wird dann in Rotation um zwei in der Regel senkrecht zueinander angeordnete Achsen versetzt. Wärme wird in die Rotationsschmelzform eingetragen. Die Drehzahlen der Rotationsschmelzformen sind niedrig, so dass Fliehkräfte im Vergleich zur Schwerkraft einen geringen Einfluss besitzen. Das Kunststoffmaterial beginnt zu schmelzen und sich an der Innenseite der Rotationsschmelzform anzulegen, wodurch dem Kunststoffbehälter seine spätere Form gegeben wird. Für diese sehr weit verbreitete Variante des Rotationsformverfahrens sind Verarbeitungstemperaturen oberhalb der Schmelz- bzw. Erweichungstemperatur des Kunststoffmaterials erforderlich.

Einige Materialien, insbesondere Thermoplaste mit hoher Schmelz- bzw. Erweichungstemperatur oder auch Duroplaste, werden im Rotationsverfahren daher in an sich ebenfalls bekannter Weise bevorzugt so verarbeitet, dass ein chemischer Vorläufer des für das Formteil vorgesehenen Materials, der sogenannte Kunststoffvorläufer, als Schmelze in flüssiger Form in die Rotationsschmelzform eingebracht wird und dort unter Rotation bei gleichzeitiger Formgebung chemisch zum endgültigen Kunststoffwerkstoff reagiert, insbesondere polymerisiert. Dieses Verfahren kommt z.B. vorteilhaft zur Herstellung von Formteilen aus Polyamid 6 (PA6), Polyamid 12 (PA12) oder ihren Co-Polymeren zum Einsatz, wobei als Kunststoffvorläufer die entsprechenden Lactame, also z.B. Caprolactam und/oder Laurinlactam, eingesetzt werden, die bei Raumtemperatur unter Normalbedingungen in fester Form vorliegen, im Rotationsverfahren jedoch als Schmelze mit sehr niedriger Viskosität (Größenordnung 10 mPas, d.h. ungefähr wie Wasser) verarbeitet werden. Die Prozesstemperatur wird bevorzugt unterhalb der Schmelztemperatur des fertigen Kunststoffs gehalten.

Auch die Polymerisationsreaktionen von Dicyclopentadien (DCPD) zu PolyDicyclopentadien (PDCPD, z.B. Telene® der Fa. Rimtec Corp.) oder von cyclischem Butylenterephthalat (z.B. CBT® der Fa. Cyclics) zu Polybutylenterephthalat (PBT) werden im Rotationsverfahren genutzt. Desweiteren ist es bekannt, Formteile aus Polyurethanen (PU) im Rotationsverfahren durch Reaktion von Di- und/oder Polyisocyanaten mit Di- und/oder Polyolen als Kunststoffvorläufern herzustellen.

Allen genannten Materialsystemen ist gemeinsam, dass das hergestellte Formteil aus einem Kunststoffmaterial besteht, das erst während der Formgebung im Rotationswerkzeug aus einem Kunststoffvorläufer gebildet wird, der im Rotationswerkzeug zunächst in flüssiger Form vorliegt.

Aus der DE 10 2011 009 748 A1 ist ein Verfahren zur Herstellung eines zweischichtigen Kunststoffes bekannt, bei dem in ein vorgewärmtes Formwerkzeug ein Gemisch eingebracht wird, welches eine Polyamid-Vorläuferverbindung, wenigstens einen Aktivator und einen Katalysator enthält. Unmittelbar vor dem Einbringen des Gemisches in das vorgewärmte Formwerkzeug werden die Komponenten vermischt und als eine Zubereitung eingebracht. Nachdem das erste Gemisch mindestens teilweise polymerisiert ist, wird ein zweites Gemisch in die Form eingebracht. Nach einer weiteren Polymerisationsreaktion zur Bildung einer weiteren Polyamidschicht wird das Formwerkzeug abgekühlt, so dass das Kunststoffprodukt entformt werden kann.

Aus der US 2009/0266823 A1 ist ein Verfahren zur Herstellung einer Kunststoffblase aus Polyurethan bekannt, die sich als Liner für faserverstärkte Druckbehälter eignet. Die Blase wird im Rotationsverfahren aus einer reaktionsfähigen Mischung hergestellt, die als Kunststoffvorläufer Gyrothane® 900 oder 909 (im Wesentlichen ein Polyetherpolyol) und Raigidur® FPG (im Wesentlichen ein Diisocyanat) enthält.

Ein Problem der Behälterfertigung besteht grundsätzlich darin, dass die Rotationsschmelzform nur die Außenkontur des Formteils definiert, nicht aber die Innenform. Bei der Herstellung kann zwar eine theoretische mittlere Wandstärke des Formteils durch geeignete Abstimmung der zugegebenen Materialmenge auf die Größe der Werkzeuginnenoberfläche eingestellt werden, es kann allerdings nicht garantiert werden, dass der Behälter eine konstante Wanddicke aufweist. Diese unterliegt immer einer gewissen Verteilung. Gerade im Bereich von Innenradien, also Bereichen, in denen die Formwandung der Rotationsform ins Werkzeuginnere hineinragt, erhält man Wandstärken, die zum Teil sogar erheblich unterhalb der mittleren Wandstärke liegen. Je kleiner dieser Innenradius ist, desto größer ist das Ausmaß dieser Wandstärkenreduzierung. Im Bereich von Außenradien wiederum, also bspw. der äußeren Kante eines Kunststoffbehälters, sammelt sich immer Material an, wodurch die Wandstärke in solchen Bereichen über der mittleren Wandstärke liegt. Mit sinkendem Außenradius nimmt das Ausmaß der Wandstärkenerhöhung zu. Während Außenradien lediglich zu einem Wandstärkenzuwachs führen, kann die Stabilität dünnwandiger Stellen im Bereich von Innenradien erheblich beeinträchtigt sein, was die Belastbarkeit und Haltbarkeit des Formteils mindert.

Besondere Herausforderungen ergeben sich bei komplexen Formen, wie z.B. integral ausgebildeten Laschen oder dergleichen. Gerade in engstelligen Bereichen, z.B. im Bereich von Außenwänden, die in einem geringen Abstand parallel zueinander verlaufen, kann es im Verlauf der Polymerisation zu Brückenbildungen kommen, was die Lunkerbildung zwischen den Wänden begünstigt. Das Konturmerkmal wird dann unvollständig ausgeformt.

Gerade vor dem Hintergrund steigender Anforderung in Bezug auf das Packaging in Fahrzeugen muss aber oftmals ein komplexer und zerklüfteter Bauraum auf dem Fahrzeug oder einer Maschine ideal ausgenutzt werden, was einen komplexen Behälteraufbau mit sich bringt. Es ist daher wünschenswert, die Materialverteilung auch kompliziert geformter Formteile gezielt beeinflussen zu können. Dabei ist es vorteilhaft, wenn die Wandstärke an bestimmten Positionen des fertigen Kunststoffbehälters lokal erhöht werden kann. Eine Erhöhung der Materialeinwaage ist als Abhilfe nur sehr eingeschränkt geeignet, da das zusätzlich eingesetzte Material im Wesentlichen nur zu einer weiteren Wandstärkenerhöhung im Bereich der Außenradien führt, während die Wandstärken im Bereich der Dünnstellen nur unwesentlich verbessert werden. Diese Maßnahme führt letztlich nur dazu, dass der Materialverbrauch und das Teilegewicht erhöht werden, wodurch gerade im Fall von Behältern und Tanks das verfügbare Nutzvolumen reduziert wird.

Es ist bekannt, die Wandstärkenverteilung durch geeignete Wahl von Drehzahlen, Drehzahlverhältnissen, Temperaturverlauf im Werkzeug und anderen Maßnahmen zu beeinflussen. Die US 3,417,097 beschreibt beispielsweise ein Verfahren, bei dem Caprolactam in flüssiger Form in ein Rotationswerkzeug gegeben wird, sich unter Rotation des Werkzeugs an die innere Kontur der Rotationsform anlegt und zu einem Formteil polymerisiert. Zur Verbesserung der Wandstärkengleichförmigkeit wird vorgeschlagen, die Materialmenge auf mindestens zwei Dosiervorgänge aufzuteilen und ein vorbestimmtes Temperatur- und Rotationsprofil abzufahren.

Da im Rotationsverfahren, ähnlich wie beim Blasformen und im Gegensatz zum Spritzgussverfahren, jedoch nur die Formteilaußenoberfläche werkzeuggebunden ist, sind den erzielbaren Ergebnissen bei gegebener Formteilgeometrie grundsätzliche Grenzen gesetzt. Besonders ausgeprägt sind diese Effekte bei der Bearbeitung von Monomeren, die als niedrigviskose Schmelze in das Rotationswerkzeug gegeben und unter Rotation auspolymerisiert werden. Je mehr die Formteilgeometrie von der Kugelform abweicht, desto breiter wird die Verteilung der Wandstärken.

Für die Rotationsformung mit Kunststoffpulvern oder -pellets auf Basis eines thermoplastischen Sinterverfahrens ist in der US 6,852,788 B2 eine Zusammensetzung aus Träger- und Binderkomponenten sowie einem Kunststoffpulver beschrieben. Diese Zusammensetzung wird als Formmasse in diejenigen Bereiche des Rotationswerkzeugs aufgebracht, in denen die Wandstärke des Formteils erhöht werden soll, also z. B. im Bereich von Rippen und Anschraubdomen. Als Träger- und Binderkomponente werden u.a. Polyethylen sehr niedriger Dichte, Vaseline, Paraffine und Bienenwachs vorgeschlagen. Alternativ können dem Grundpolymer des Formteils angepasste Thermoplaste mit geringem Schmelzindex verwendet werden.

Dieses Verfahren ist jedoch nicht verwendbar, wenn ein Kunststoffvorläufer als Schmelze in die Rotationsschmelzform eingebracht wird und die Polymerisation des Kunststoffvorläufers unterhalb der Schmelztemperatur des fertigen Kunststoffs durchgeführt und aktiviert wird. Weil die Prozesstemperaturen unterhalb der Schmelztemperatur des fertigen Polymeren gehalten werden, würde das mit der Zusammensetzung zugegebene pulverförmige Polymermaterial weder mit sich selbst, noch mit dem durch Polymerisation neu entstehenden Material zusammensintern. Hinzu kommt, dass die Herstellung der Formmasse vergleichsweise aufwendig ist.

Aus der US 3,610,457 ist ein durch Rotationsverfahren herstellbarer Kunststoffhohlkörper bekannt, bei dem ein Einsatz mit Plastik überzogen wird. Der Einsatz wird mit einem Materialbündel versehen, welches Kunststoff während des Rotationsformens absorbiert.

Es ist davon ausgehend Aufgabe der Erfindung, eine vereinfachte Möglichkeit vorzuschlagen, die Wandstärke eines insbesondere auf Basis einer Kunststoffvorläuferschmelze hergestellten Kunststoffformteils gezielt zu beeinflussen, so dass Wandstärken des fertigen Kunststoffformteils gezielt lokal erhöht und gestärkt werden können.

Diese Aufgabe wird erfindungsgemäß mit den Merkmalen des Anspruchs 1 gelöst.

Vorzugsweise wird das Einlegeelement in denjenigen Bereichen des Rotationswerkzeugs platziert und ggf. fixiert, beispielsweise verklebt, in denen die Wandstärke des fertigen Kunststoffformteils erhöht bzw. in denen am späteren Formteil ein bestimmtes Konturmerkmal angeformt werden soll.

Die Rotationsschmelzform kann für den Prozess bereits vorgewärmt sein.

Der Kunststoffvorläufer kann z.B. als Flüssigkeit von nicht zu hoher Viskosität in das Formwerkzeug eingebracht werden. In diesem Fall ist vorgesehen, dass der Kunststoffvorläufer als flüssige Schmelze in die Rotationsschmelzform eingebracht wird. Er kann jedoch auch in fester Form (z.B. als Pulver, Pellets, Schuppen oder dergleichen) zugegeben und erst im Werkzeug aufgeschmolzen werden, so dass ein Teil der gebildeten Schmelze von dem Einlegeelement aufgenommen wird. In beiden Fällen besteht die Möglichkeit, während des Schrittes c) Wärme in die Rotationsschmelzform einzubringen. Generell erweist es sich jedoch als vorteilhaft, Schritt c) bei einer Prozesstemperatur durchzuführen, bei der der Kunststoffvorläufer in flüssiger Form vorliegt. Das Einlegeelement saugt sich dann mit dem geschmolzenen Kunststoffvorläufer voll, wenn die Rotationsschmelzform vorzugsweise biaxial rotiert. Indem das Einlegeelement die Schmelze an einer klar definierten Position festhält, wird der Aufbau von Wandstärke in dem mit dem Einlegeelement ausgestatteten Bereich des Rotationswerkzeugs gefördert, weil dieser Bereich durch die Saug- und Tränkwirkung eine erhöhte Materialansammlung gegenüber anderen Bereichen des Werkzeugs erfährt.

Eine Erwärmung der Rotationsschmelzform während des Prozess ist jedoch nicht zwingend erforderlich. Geeignete Materialsysteme, wie beispielsweise Polyurethane (PU), lassen sich auch bei Raumtemperatur verarbeiten. Der Kunststoffvorläufer muss dann lediglich in flüssiger Form als Schmelze in die Rotationsschmelzform eingebracht werden, wo er unter anschließender Rotation der Schmelzform auspolymerisiert.

Die Herstellung des Formteils in der Rotationsschmelzform erfolgt allenfalls unter geringem Druck, typischerweise bei einem Druck von unter 2000 mbar. Bevorzugt ist die Rotationsschmelzform jedoch belüftet, so dass das Verfahren im Wesentlichen drucklos, d.h. bei Atmosphärendruck (z.B. 1013 mbar) abläuft.

Gerade bei Herstellungsverfahren, bei denen der Kunststoffvorläufer als Schmelze, d.h. in flüssiger Form, in die Rotationsschmelzform eingebracht wird, erweist sich der Einsatz des saugfähigen und/oder tränkbaren Materials als vorteilhaft, da die Rotation der Schmelzform unmittelbar zum Eindringen der Schmelze in das Einlegeelement führt. Vorzugsweise ist die Schmelze eine niedrigviskose Schmelze, insbesondere eine Monomerschmelze, da diese eine erhöhte Saug- und Tränkwirkung zeigt. Als bevorzugte Materialien für die Fertigung der erfindungsgemäßen Kunststoffformteile werden Polyamid 6 (PA6), Polyamid 12 (PA12) und deren Co-Polymere verwendet. Als monomeres Ausgangsmaterial werden in diesem Fall vorzugsweise die entsprechenden Lactame, wie z.B. Caprolactam und/oder Laurinlactam, als Kunststoffvorläufer eingesetzt.

Weitere geeignete Materialien zur Fertigung der erfindungsgemäßen Kunststoffformteile sind Polydicyclopentadien (DCPD) und Polybutylenterephthalat (PBT). Als monomeres bzw. oligomeres Ausgangsmaterial werden in diesen Fällen als Kunststoffvorläufer bevorzugt Dicyclopentadien (DCPD; z.B. Telene® der Fa. Rimtec Corp.) bzw. cyclisches Oligobutylenterephthalat (z.B. CBT® der Fa. Cyclics) mit den entsprechenden Katalysatoren bzw. Zusätzen eingesetzt. Ebenfalls in Frage kommen Polyurethane (PU), zu deren Herstellung als Kunststoffvorläufer Mischungen aus Di- und/oder Polyisocyanaten und Di- und/oder Polyolen eingesetzt werden. Eine oder beide dieser Vorläuferkomponenten können auch Oligomere oder Präpolymere, d.h. Polymere mit relativ geringem Molekulargewicht, sein.

Kunststoffvorläufer im Sinne der vorliegenden Erfindung sind ganz allgemein Monomere, Oligomere, Präpolymere und dergleichen, einschließlich Mischungen von zwei oder mehr Stoffen dieser Kategorien. Die erfindungsgemäßen Kunststoffvorläufer liegen in der Rotationsschmelzform als flüssige Schmelze vor und reagieren, ggf. unter dem Einfluss ebenfalls zugesetzter Katalysatoren, Aktivatoren oder sonstiger Zusätze, unter Bildung eines Kunststoffs. Bei der Reaktion kann es sich um radikalische, kationische oder anionische Polymerisation, Polyaddition, Polykondensation, Metathesepolymerisation oder dergleichen handeln. Bei dem erhaltenen Kunststoff kann es sich um Thermoplaste oder Duroplaste handeln.

Es wurde festgestellt, dass durch den gezielten Einsatz eines saugfähigen und/oder tränkbaren Materials bei der Rotationsformung auf Basis niedrigviskoser Schmelzen von Kunststoffvorläufern scharf abgegrenzte und stabile lokale Wandstärkenerhöhungen in den betreffenden Bereichen des Rotationswerkzeugs, in denen das Einlegeelement angeordnet ist, erreicht werden können. Das Einlegeelement nimmt die flüssige Schmelze in sich auf, indem es von der Schmelze getränkt wird und/oder sich mit dieser vollsaugt. Das saugfähige und/oder tränkbare Material ist insbesondere für Verfahren geeignet, bei denen der Kunststoffvorläufer als Schmelze eine geringe Ausgangsviskosität aufweist. Vorzugsweise wird die Polymerisation des Kunststoffvorläufers unterhalb der Schmelztemperatur des fertigen Kunststoffs durchgeführt. Die vorbereitete Schmelze kann beispielsweise über eine vorzugsweise beheizbare Einspritzvorrichtung in die Rotationsschmelzform eingebracht werden.

Grundsätzlich können ein oder mehrere Einlegeelemente bei der Herstellung eines Kunststoffformteils zum Einsatz kommen und die relevanten Stellen effektiv verstärken.

Das saugfähige oder tränkbare Material kann neben der gezielten Wandstärkenerhöhung und/oder der verbesserten Ausformung bestimmter Konturmerkmale zusätzlich weitere Funktionen erfüllen. So kann es gleichzeitig zu einer Verstärkung der entsprechenden Bereiche am fertigen Formteil dienen. Dazu kann das saugfähige und/oder tränkbare Material aus z.B. Glasfasern, Kohlefasern, geeigneten Kunststofffasern oder derartige Fasern enthaltenden Preforms ausgewählt werden oder solche Materialien enthalten. Gleichermaßen kann das Einlegeelement Verstärkungselemente in Form von Einlegeteilen, wie z.B. ein Rohrelement, einen Stützring oder dergleichen aufweisen oder im Rotationswerkzeug fixieren, die die Stabilität der betreffenden Stellen im fertigen Kunststoffformteil nochmals erhöhen. Vorzugsweise werden diese Verstärkungselemente zumindest teilweise durch die Polymerisation in den Kunststoff eingebettet.

Durch den Einsatz des Einlegeelements können vielfache Probleme, die bei der Herstellung komplex geformter dreidimensionaler Formteile auftreten, effizient gelöst werden. Im Folgenden soll erläutert werden, was im Rahmen dieser Erfindung in Bezug auf die Form von Kunststoffformteilen, insbesondere Behältern, als "einfach" und "komplex" verstanden wird. Dabei werden neben erfindungsgemäßen Rotationsverfahren auch Schleuderverfahren zur Erläuterung herangezogen, wobei letztere nicht Gegenstand der vorliegenden Erfindung sind.

Bei erfindungsgemäßen Rotationsverfahren sind die Rotationsgeschwindigkeiten so niedrig, dass die Schwerkraft gegenüber Zentrifugalkräften dominiert, so dass - bis zur vollständigen Verteilung des Materials an der Werkzeuginnenwand - immer ein Materialpool am tiefsten Punkt des Werkzeugs vorliegt. Im Unterschied dazu gehen Schleuderverfahren von so hohen Drehzahlen aus, dass Zentrifugalkräfte gegenüber der Schwerkraft dominieren.

Ausgehend von dreidimensionalen Hohlkörpern, die im Rotationsverfahren unter Rotation um zwei i.d.R senkrecht zueinander stehende Achsen hergestellt werden, ist die einfachste denkbare Formteilgeometrie die einer Kugel. Dies hat damit zu tun, dass jede beliebige Achse durch den Kugelmittelpunkt eine Symmetrieachse darstellt, wobei eine Rotation der Kugel um einen beliebigen Winkel um die Symmetrieachse die Kugel auf sich selbst abbildet. Oder anders ausgedrückt, zu jeder Achse durch den Kugelmittelpunkt (Symmetrieachse) existieren jeweils unendlich viele Symmetrieebenen durch die betrachtete Symmetrieachse, wobei eine Spiegelung an der Symmetrieebene die Kugel auf sich selbst abbildet. Eine Kugel besitzt somit volle Rotationssymmetrie in Bezug auf jede Achse durch den Kugelmittelpunkt (Symmetrieachse).

Zur Herstellung eines Kunststoffformteils in Form eines kugelförmigen Hohlkörpers im Rotationsverfahren wird die Rotationsschmelzform daher bevorzugt so auf der Rotationsmaschine angeordnet, dass die beiden Rotationsachsen sich im Mittelpunkt des kugelförmigen Inneren der Form schneiden, in der Regel im rechten Winkel zueinander. Die Rotationsachsen sind somit kollinear zu Symmetrieachsen der Kugel.

Unter solchen Gegebenheiten lassen sich bei hohen Drehzahlen (also im biaxialen Schleuderverfahren) Formteile mit sehr gleichförmiger Wandstärke herstellen. Jede zum Werkzeuginneren konzentrische Kugelschale stellt eine Äquipotenzialfläche im Zentrifugalfeld dar. Ein im Werkzeuginneren vorhandenes Material, bspw. eine fließfähige Kunststoffvorläuferschmelze, wird an die Forminnenwand geschleudert und legt sich dabei sehr gleichmäßig an diese an. Das resultierende Formteil zeichnet sich durch sehr enge Wandstärkentoleranzen aus.

Auch im biaxialen Rotationsverfahren, also bei niedrigen Drehzahlen, bei denen Zentrifugalkräfte praktisch keine Rolle spielen, lassen sich kugelförmige Formteile bei geeigneter Wahl der Parameter mit sehr guter Wandstärkenverteilung herstellen. Dabei kommt insbesondere den Drehzahlen um die beiden Rotationsachsen sowie dem Drehzahlverhältnis eine zentrale Bedeutung zu.

Völlig analog zur Kugelform bei geschlossenen Hohlkörpern lassen sich endseitig offene Rohre mit rundem und über die gesamte Länge konstantem Querschnitt sehr einfach in einem einachsigen Schleuder- oder Rotationsverfahren herstellen. Das zylindrische Werkzeug wird dabei so angeordnet, dass die Rotationsachse horizontal und zugleich kollinear mit der (in diesem Fall einzigen) Symmetrieachse ausgerichtet ist.

Im Rahmen dieser Erfindung stellt die Kugelform somit eine einfache Geometrie eines Hohlkörpers dar. Mit zunehmender Abweichung von der Kugelform nimmt die Komplexität zu. Betrachtet man bspw. einen Hohlkörper in Form eines Zylinders mit z.B. halbkugelförmigen Endkappen, so existiert hier nur noch eine Symmetrieachse. Die Rotationssymmetrie um eine zweite, die einzige Symmetrieachse im rechten Winkel und im Mittelpunkt des Hohlkörpers schneidende Achse ist jedoch bereits erheblich gestört. Diese zweite Achse stellt in diesem Beispielfall nur noch eine 2-zählige Achse dar, d.h. der Hohlkörper wird nur noch bei einer Rotation um ein Vielfaches von 360°/2 auf sich selbst abgebildet.

In einer solchen Situation lässt sich im biaxialen Schleuderverfahren kein Formteil mit gleichförmiger Wandstärke realisieren, weil die Äquipotenzialflächen im Zentrifugalfeld zumindest bei identischen Drehzahlen um beide Achsen auch hier Kugelschalen darstellen und damit, weil die Form nicht kugelförmig ist, nicht mehr umlaufend in konstantem Abstand von der Forminnenwand verlaufen. Im Fall eines Zylinders mit Länge l und Durchmesser d und l > d oder sogar l >> d ist anschaulich klar, dass ein fließfähiges Material sich bei hoher und gleicher Drehzahl um die Längsachse (kollinear mit der Symmetrieachse) und um die kurze Achse (kollinear mit der 2-zähligen Achse) praktisch vollständig an den Enden der länglichen, zylindrischen Form ansammeln würde, während sich im restlichen Bereich praktisch keine Wandstärke aufbauen würde.

Auch im biaxialen Rotationsverfahren, also bei niedrigen Drehzahlen, ergibt sich im Fall eines länglichen Zylinders geometriebedingt eine gegenüber der Kugelform schlechtere Wandstärkenverteilung. Dies lässt sich anschaulich verstehen, wenn man betrachtet, dass bei geringen Drehzahlen immer ein Materialpool am tiefsten Punkt des Werkzeugs vorliegt. Unterschiedliche Punkte auf der Werkzeuginnenoberfläche bewegen sich je nach Abstand vom Schnittpunkt der Rotationsachsen mit unterschiedlicher Geschwindigkeit durch diese Minimumposition hindurch. Pro Durchgang durch die Minimumposition ist die Verweildauer in dieser Position daher für unterschiedliche Punkte auf der Zylinderfläche unterschiedlich. Zudem ist es bei einer solchen Geometrie ungleich schwieriger als bei einer Kugel, Drehzahlen und Drehzahlverhältnis so zu wählen, dass alle Punkte auf der Zylinderfläche im Laufe des Produktionszyklus annähernd gleich oft die Minimumposition durchlaufen. Beide Effekte zusammen führen zu einer gegenüber der Kugelform deutlich verschlechterten Wandstärkengleichförmigkeit.

Für n-zählige Achsen gilt allgemein, dass ein Objekt bei Rotation um Vielfache von 360°/n auf sich selbst abgebildet wird, wobei n eine positive ganze Zahl ist. Objekte mit n-zähligen Achsen besitzen bei n ≥ 2 noch eine gewisse eingeschränkte oder gestörte Rotationssymmetrie, aber keine volle Rotationssymmetrie mehr. Volle Rotationssymmetrie ist gleichbedeutend mit der Anwesenheit einer ∞-zähligen Achse. Bei n = 1 wird ein Objekt nur bei Rotation um Vielfache von 360° auf sich selbst abgebildet. Die Komplexität eines Formteils steigt also mit sinkendem Wert von n.

Formen, die nicht rotationssymmetrisch sind, weisen gegenüber rotationssymmetrischen Objekten also eine Komplexität auf, die die Fertigung erschwert, da sie eine ungleiche Materialverteilung des Kunststoffes fördern. Durch die gezielte Platzierung des Einlegelements kann der lokale Aufbau von Wandstärke, insbesondere an Stellen, die sonst eine geringe Wandstärke aufweisen, gezielt gefördert werden.

Neben dem oben betrachteten Aspekt der Rotationssymmetrie können dabei weitere Formmerkmale vorliegen, die eine gleichmäßige Wandstärkenausformung im biaxialen Rotationsverfahren erschweren. Dazu gehören insbesondere Engstellen und Innenradien bzw. Innenkanten.

Im Bereich von Engstellen dürfen benachbarte Wandungsabschnitte nicht zu dicht beieinander liegen, da es sonst zu Lunkerbildungen und/oder unvollständiger Ausformung kommen kann. Solche Engstellen können im Bereich von Außenradien beispielsweise dadurch entstehen, dass benachbarte Abschnitte des Formteils, z.B. Wandungsabschnitte eines Behälters, unter einem spitzen Winkel zueinander verlaufen bzw. aneinander angrenzen. Dabei bildet sich im Grenzbereich der Wandungsabschnitte ein sich verjüngender bzw. zum Grenzbereich hin immer enger werdender Abschnitt aus, ähnlich einer Ecke im Inneren eines Behälters. Im Übergangsbereich zwischen den Wandungsabschnitten ist das Formteil und/oder die Rotationsschmelzform bzw. die innere Oberfläche des jeweiligen Teils konkav geformt und bildet einen Außenradius aus, der bezogen auf das Innere des Formteils bzw. der Rotationsschmelzform eine nach außen gerichtete Wölbung aufweist. Im fertigen Formteil bildet dieser Abschnitt eine außenseitige Außenkante. Je kleiner der Winkel zwischen den benachbarten Wandungsabschnitten ist, desto größer muss der Radius im Eckbereich sein, damit Lunkerbildung vermieden wird. Bei Winkeln von 30° bis 60° muss im Stand der Technik in der Regel zumindest ein Radius in der Größe R15 berücksichtigt werden. Die verwendete Maßeinheit für den Radius R ist [mm], wobei R15 kennzeichnet, dass es sich um einen Radius mit einem Nennmaß von 15 mm handelt. Durch diese Weise wird eine Rundung gekennzeichnet. Gerade für die oben genannten Anwendungsfälle erweist sich das gezielte Platzieren des Einlegeelements als ideal, um derartige kritische und komplexe Formen zu realisieren. Die oben genannten Werte für den Winkel und den Radius können durch das Einlegeelement sogar unterschritten werden.

Engstellen entstehen bei Formteilen auch dadurch, dass benachbarte Formteilabschnitte oder Oberflächenabschnitte der Rotationsschmelzform nah zueinander geführt sind. Beispielsweise kann die Wandung des Formteils bzw. der Rotationsschmelzform einen nach außen (also nicht in das Innere der Rotationsschmelzform) vorstehenden Abschnitt aufweisen. In diesem Abschnitt können Wandabschnitte des Formteils bzw. der Rotationsschmelzform so verlaufen, dass sie sich gegenseitig annähern und/oder parallel verlaufen. Derartige Abschnitte bilden auf der Innenseite des Formteils bzw. der Rotationsschmelzform eine Einbuchtung und/oder eine Senke und/oder einen Durchgang aus.

Die Engstelle in dem Formteil kann insbesondere in einem Sackloch oder dergleichen enden. Sie kann auch durch nach außen ausgebildete Rippen oder Dome entstehen. Die Rotationsschmelzform weist eine der Engstelle entsprechende Innenkontur auf, beispielsweise eine sacklochähnliche Einbuchtung oder sonstige zur Außenseite hin verlaufende Innenkonturen mit geringen oder sich verringernden Wandabständen der Formwandung. Im Bereich der Formteilfertigung im Rotationsverfahren nach dem Stand der Technik ist bekannt, dass parallele oder nahezu parallele Wandungen im Werkzeug wenigstens einen Abstand aufweisen sollten, der zumindest dem 4-fachen, besser dem 5-fachen, der Nennwandstärke des Formteils entsprechen muss, um die oben genannte Problematik auszuschließen. Gemäß einer Alternative der vorliegenden Erfindung, sorgt ein in eine derartige Engstelle eingebrachtes Einlegeelement dafür, dass der kritische Bereich nach dem Rotationsschmelzprozess über eine ausreichende Wandstärke verfügt. Ferner ist es möglich, den Abstand zwischen den Werkzeugwänden zu reduzieren, z.B. bis hinab in den Bereich der nominalen Formteilwandstärke. So können bspw. einwandige Laschen oder dergleichen an einen Hohlkörper angeformt werden, die gut ausgeformt werden.

Gerade die Ausbildung von Befestigungslaschen oder sonstigen Formen, die an dem fertigen Formteil sich nach außen erstreckende Konturen bilden, wird durch den gezielten Einsatz des Einlegeelements in einer Senke, einer Mulde, einer Verjüngung oder einer Vertiefung in der inneren Oberfläche der Rotationsschmelzform verbessert. Um die Bildung von Lunkern zu vermeiden, müssen Befestigungslaschen bekanntermaßen konstruktiv auf eine bestimmte Wandstärke ausgelegt werden, so dass eine einwandfreie Ausformung der Laschen mit Material gewährleistet ist. Der gezielte Einsatz des Einlegeelements zur Wandstärkenerhöhung verbessert hier das Ergebnis des Fertigungsprozesses maßgeblich und kann dazu beitragen, Befestigungslaschen mit höherer Tragkraft zu erzielen. Dazu wird das Einlegeelement gezielt in dem entsprechenden Bereich der Rotationsschmelzform platziert, wo es eine einwandfreie Ausformung des Bereichs mit Material garantiert. Zudem kann die Lasche insgesamt schlanker oder dünner ausgeführt werden, wobei die Tragfähigkeit erhalten bleibt.

Auch die Ausbildung von Innenradien an rotationsgeformten Formteilen ist häufig kritisch. Diese zeichnen sich durch eine zur Innenseite des Formteils und/oder der Rotationsschmelzform gerichtete Wölbung der Oberfläche und/oder eine Innenkante aus, die in das Innere des Formteils und/oder der Rotationschmelzform hineinragt. Sie sind gekennzeichnet durch eine bezogen auf das Innere des Formteils bzw. der Rotationsschmelzform konvexe Form der Wand/Oberfläche des Formteils und/oder der Rotationsschmelzform. Derartige Formen treten beispielsweise in einem Sacklochgrenzbereich, an Abstufungen, wie einer nach außen gewölbten Verstärkungsrippe oder an Erhebungen, wie z.B. an nach innen freistehenden Wänden, z.B. Schwallwänden, auf. Für Behälter können beispielsweise Tüllen zum Aufstecken von Schläuchen direkt an den Behälter angeformt werden, wobei im Übergangsbereich von der Tülle zu der übrigen Wand des Behälters eine nach innen gerichtete Kante oder Wölbung ausgeformt wird, an der die Wandstärke des Formteils aufgrund der Kontur des Werkzeugs reduziert ist. Hier besteht grundsätzlich die Gefahr von Dünnstellen in der Formteilwandung. Daher ist der praktisch zu realisierende minimale Innenradius begrenzt, und es ist beispielsweise üblich, bei senkrecht zueinander angeordneten Flächen des Formteils einen Radius von R10 (Radius mit Nennmaß 10 mm) im Grenzbereich nicht zu unterschreiten, damit in derartigen Bereichen des Formteils noch eine ausreichende Wandstärke ausgebildet wird. Nach einer weiteren Alternative der vorliegenden Erfindung, wird durch das Platzieren des Einlegeelements im Bereich nach innen gerichteter Kanten oder Wölbungen eine optimale Anhäufung des Kunststoffs erzielt. Mittels des Einlegeelements können Innenradien effektiv verstärkt, aber auch kleinere Innenradien beispielsweise von weniger als R10 effektiv realisiert werden, indem das Einlegeelement gezielt im Bereich von Innenradien platziert wird.

Ungeachtet dessen können auch beliebige andere Bereiche der Formteilwandung gezielt verstärkt werden, beispielsweise im Bereich von Flanschverbindungen und/oder Einlegeteilen wie Muttern oder anderen Inserts. Erfindungswesentlich ist, dass Einlegeelemente nur in einem oder mehreren Bereichen der Rotationsschmelzform eingesetzt werden, so dass die Wandstärke des Kunststoffformteils in diesen Bereichen lokal und gezielt erhöht wird. Jeder dieser Bereiche für sich ist kleiner als die gesamte Innenoberfläche des Werkzeugs, und auch gemeinsam umfassen diese Bereiche nur einen Teilbereich bzw. eine Teilfläche des Werkzeugs, der bzw. die kleiner als die gesamte Innenoberfläche des Werkzeugs ist. Es findet also keine im Wesentlichen vollflächige Auskleidung des Werkzeugs mit einem oder mehreren Einlegeelementen statt. Vorteilhafterweise wird weniger als 80% der Werkzeuginnenoberfläche mit einem oder mehreren Einlegeelementen versehen, bevorzugt weniger als 60%, besonders bevorzugt weniger als 40%, insbesondere bevorzugt weniger als 30%.

Unter einer Erhöhung der Wandstärke wird dabei verstanden, dass der betreffende Bereich des Formteils eine höhere Wandstärke aufweist als ohne Einsatz des Einlegeelements. Die Wandstärke des betreffenden Bereichs nimmt somit relativ zur mittleren Wandstärke des Formteils zu. Letzteres bedeutet nicht unbedingt, dass die Wandstärke im betreffenden Bereich absolut größer ist als die mittlere Wandstärke. Es kann bspw. bedeuten, dass bei einem Formteil mit 5 mm Nennwandstärke ein bestimmter Bereich bei Fertigung nach dem Stand der Technik eine Wandstärke von nur 1 mm hat, die sich durch Einsatz eines Einlegeelement auf 3 mm erhöht.

Die Nennwandstärke d_{N} (mittlere Wandstärke) des Kunststoffformteils ergibt sich dabei jeweils aus der Innenoberfläche A der Rotationsschmelzform und der Masse m sowie der Dichte ρ des Kunststoffmaterials im verarbeiteten Zustand in guter Näherung nach d_{N} = m · A⁻¹ · ρ⁻¹. Bei Systemen, die bei der Reaktion des Kunststoffvorläufers zum späteren Kunststoff keine Nebenprodukte freisetzen und abgeben, ist die Masse m des Kunststoffmaterials identisch mit der Masse des zugegebenen Kunststoffvorläufers.

Als saugfähige und/oder tränkbare Materialien für das Einlegeelement können Textilien und/oder eine Textilzusammensetzung zum Einsatz kommen. Hierzu eignen sich insbesondere Gewebe, Gelege, Gestricke, Vliese und dergleichen. Aufgrund ihrer Verformbarkeit können diese Textilien auch in schwer zugänglichen Formbereichen bzw. Innenkonturabschnitten der Rotationsschmelzformen positioniert werden. Daher eignen sich diese Materialien besonders zur Ausformung einer Lasche eines Kunststoffbehälters. Das saugfähige oder tränkbare Material kann im Fall flächenhafter Materialien regelmäßig oder unregelmäßig gefaltet oder gerollt sein und ohne gesonderte Fixiermittel in den vorgesehenen Bereich des Werkzeug gestopft oder wahlweise mit geeigneten Fixiermitteln, wie z.B. einem Kleber oder dergleichen, dort fixiert werden.

Nach einer weiteren Ausführungsform umfasst oder besteht das Einlegelement aus einem vorzugsweise offenporigen Schaum und/oder einem Schwamm. In diesem Fall kann das saugfähige und/oder tränkbare Material optimal an den Konturbereich des Werkzeugs, in dem es platziert werden soll, angepasst sein. So kann das Einlegelement bspw. ring- bzw. rohrstückförmig geformt sein und damit Verwendung im Bereich einer Tülle eines Behälters finden. Da dieser Bereich häufigen Belastungen ausgesetzt ist, erweisen sich lokale Materialverstärkungen hier als vorteilhaft. Die Anpassung des Einlegelements an die innere Kontur der Rotationsschmelzform kann durch verschiedene Maßnahmen sichergestellt werden. Das Einlegelement kann bspw. im Gussverfahren, im Spritzgussverfahren oder durch mechanische Bearbeitung aus Halbzeugen hergestellt werden. Es ist auch möglich, das Einlegelement direkt in die Rotationsschmelzform aufzusprühen oder einzugießen, insbesondere als offenporigen Sprüh- oder Gießschaum, der in situ (unmittelbar am Ort) aufgebracht und gebildet und/oder ausgehärtet wird.

Es hat sich als vorteilhaft erwiesen, wenn das Einlegeelement derart ausgebildet ist, dass es sich während der Polymerisation des Kunststoffvorläufers auflöst, was zur Folge hat, dass es im fertigen Formteil nicht mehr ohne weiteres erkennbar ist Das Einlegeelement kann sich im Verlauf des Herstellungsprozesses in der Reaktionsmischung des Kunststoffvorläufers, mit der es getränkt wird, auflösen. Die Kinetik der Polymerisation, von der der zeitliche Viskositätsverlauf des Reaktionsgemisches abhängt, und die Geschwindigkeit des Auflösens können derart aufeinander abgestimmt sein, dass sich das saugfähige und/oder tränkbare Material erst dann auflöst, wenn die Viskosität der Reaktionsmischung ausreichend hoch ist, so dass die Reaktionsmischung in dem Bereich des Werkzeugs verbleibt und nicht wieder aus diesem herausfließen kann.

Gemäß einer weiteren Ausführungsform wird das Einlegeelement im Verlauf der Polymerisation nicht nur in das Kunststoffmaterial eingebettet, sondern auch chemisch mit diesem verbunden.

Um die Aufnahme der Schmelze in das Einlegeelement zu verbessern, ist nach einer weiteren Ausführungsform vorgesehen, dass die Rotation der Rotationsschmelzform zumindest in einer Rotationsachse zumindest zeitweise unterbrochen wird. Indem die Rotation des Rotationswerkzeugs zu geeigneten Zeiten im Verlauf des Prozesses zumindest in einer Achse kontrolliert angehalten wird, kann die Schmelze im Bereich des Einlegeelements zur Ruhe kommen und besser in dieses eindringen. Gemäß einer weiteren vorteilhaften Ausführungsform wird die Rotation der Rotationsschmelzform derart unterbrochen, dass das Einlegeelement an einem tiefsten Punkt der Rotationsschmelzform und/oder unter dem Pegel der flüssigen Schmelze zu liegen kommt. Diese Maßnahme kann wenigstens einmal durchgeführt oder ggf. für verschiedene Bereiche, in denen Einlegeelemente angeordnet sind, und/oder für ein und denselben Bereich des Werkzeuges wiederholt werden. Zeitpunkt, Häufigkeit und Dauer dieser Rotationsunterbrechungen sowie die Werkzeugposition während des Stillstandes können so gewählt werden, dass sich das gewünschte Ergebnis erzielen lässt.

Eine weitere Ausführungsform der Erfindung sieht vor, dass in einem weiteren Schritt d) die Rotationsschmelzform angehalten, mit einem weiteren Kunststoffvorläufer oder Kunststoffmaterial befüllt und wieder in Rotation versetzt wird, so dass sich eine innere zweite Kunststoffschicht ausbildet. Der weitere Kunststoffvorläufer kann in die Rotationsform eingeführt werden, nachdem die Reaktion des ersten Kunststoffvorläufers beendet oder zumindest so weit fortgeschritten ist, dass die erste Schicht bei Unterbrechung der Rotation ausreichend stabil ist. Auf diese Weise lassen sich Kunststoffbehälter mit mehrschichtigem Wandaufbau mit optimaler Wandstärke herstellen. Abhängig vom verwendeten Material kann zur Polymerisation des weiteren Kunststoffvorläufers Wärme in die Rotationsschmelzform eingebracht werden. Die bei der Herstellung der ersten Schicht erreichte Temperatur in Verbindung mit der Wärmetönung einer zweiten Polymerisation reicht jedoch häufig schon aus. Daher kann bei Materialsystemen, deren Polymerisation exotherm erfolgt, wie z.B. Caprolactam, auf das Einbringen von Wärme auch verzichtet werden.

Weitere Vorteile, Merkmale und Ausführungsbeispiele der Erfindung ergeben sich aus der nachfolgenden Beschreibung von Ausführungsbeispielen und den Zeichnungen.

Es zeigen:
- Fig. 1: einen Kunststoffbehälter in einer Schnittansicht;
- Fig. 2: in einer perspektivischen Ansicht eine geöffnete Rotationsschmelzform;
- Fig. 3: in einer perspektiven Ansicht eine geöffnete Rotationsschmelzform mit eingesetzten Einlegeelementen nach drei Ausführungsformen der Erfindung;
- Fig. 4: das Einlegelement in Abschnitt A aus Figur 3;
- Fig. 5: das Einlegelement in Abschnitt B aus Figur 3;
- Fig. 6: das Einlegelement in Abschnitt C aus Figur 3,
- Fig. 7: einen Schnitt durch die Befestigungslasche des erfindungsgemäß hergestellten Formteils,
- Fig. 8: einen Schnitt durch die Befestigungslasche eines nach dem Stand der Technik hergestellten Formteils,
- Fig. 9: den Kunststoffbehälter aus Figur 1, und
- Fig. 10: einen Schnitt durch einen Kantenabschnitt eines Kunststoffbehälters nach einer weiteren Ausführungsform der Erfindung.

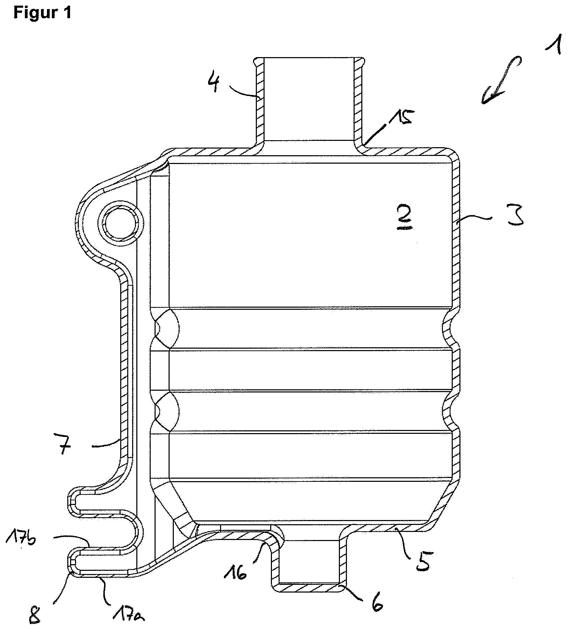

Der in Figur 1 als Beispiel eines erfindungsgemäßen Kunststoffformteils dargestellte Flüssigkeitsbehälter 1 besitzt einen hohlen Innenraum 2, der durch die Seitenwände 3 des Flüssigkeitsbehälters 1 definiert wird. Im oberen Bereich des Flüssigkeitsbehälters 1 ist ein Einfüllstützen 4 einstückig mit der Seitenwand 3 ausgebildet, über den der Flüssigkeitsbehälters 1 befüllt werden kann. Im Bodenbereich 5 des Flüssigkeitsbehälters 1 ist ein nach außen vorstehender Stutzen oder Dom 6 ausgebildet. Ein solcher Stutzen kann beispielsweise dazu dienen, den Flüssigkeitsbehälter 1 abzustützen oder zu verankern. Der Stutzen 6 muss also entsprechend belastbar sein. An der seitlichen Außenwand 7 des Flüssigkeitsbehälters 1 ist im unteren Bereich eine Lasche 8 ausgeformt, die sich ausgehend vom Innenraum 2 des Flüssigkeitsbehälters 1 massiv verengt.

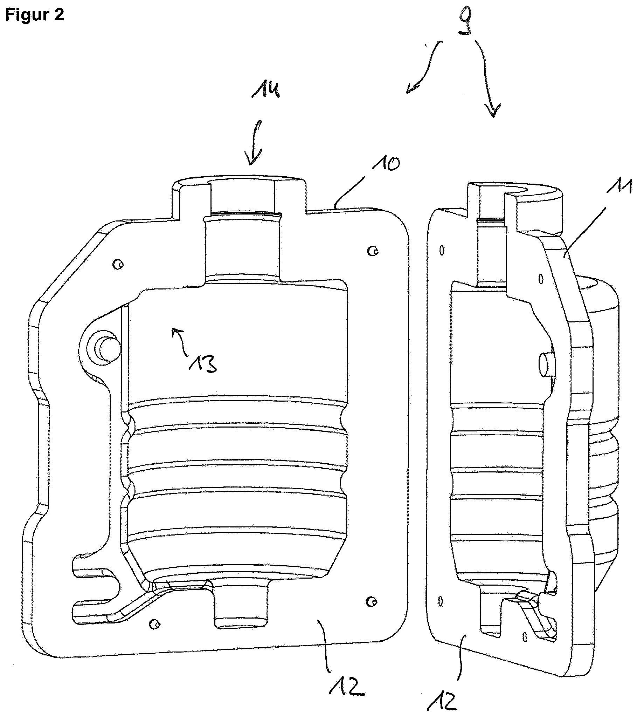

Zur Herstellung des Flüssigkeitsbehälters 1 aus Figur 1 wird ein Rotationswerkzeug, bzw. eine Rotationschmelzform 9, wie sie in Figur 2 dargestellt ist, verwendet. Diese besteht aus zwei Hälften bzw. Formschalen 10, 11, deren Kanten oder Flansche 12 aneinander gelegt werden, um diese zu verschließen. Die Innenseite der Formschalen weisen eine Kontur 13 auf, die die Außenform des Flüssigkeitsbehälters 1 aus Figur 1 definiert, wenn die Schalen 10, 11 aneinandergelegt sind. Zur Herstellung des Kunststoffbehälters wird die Rotationsschmelzform 9 erwärmt. Im verschlossenen Zustand wird sie dann mit dem chemischen Vorläufer des für das Formteil vorgesehenen Materials in Form einer Monomerschmelze (nicht dargestellt) mit niedriger Viskosität über eine Einfüllöffnung 14 befüllt und biaxial um die X-Achse und die Y-Achse in Rotation versetzt. Die Monomerschmelze bildet im Laufe einer Polymerisation den endgültigen Kunststoff des Kunststoffbehälters. Während des Prozesses wird die Temperatur in der Rotationsschmelzform 9 unterhalb der Schmelztemperatur des fertigen Polymeren gehalten. Während der Rotation legt sich die Schmelze an der Kontur 13 an und polymerisiert aus. Unter Beibehaltung der Rotation wird die Rotationsschmelzform abgekühlt, geöffnet und der ausgeformte Flüssigkeitsbehälter entnommen.

Insbesondere in Bereichen mit einem kleinen Innenradius, wie im Übergangsbereich 15 (Figur 1) zwischen dem Einfüllstutzen 4 und der Seitenwand 3 oder im Übergangsbereich 16 zwischen dem Bodenbereich 5 und dem Stutzen 6 tritt das Problem auf, dass diese Abschnitte nur eine geringe Wandstärke aufweisen. Problematisch ist auch der Abschnitt um die Lasche 8, die recht komplex gestaltet ist und zwei parallele Wände 17a, 17b aufweist, die in einem geringen Abstand voneinander verlaufen.

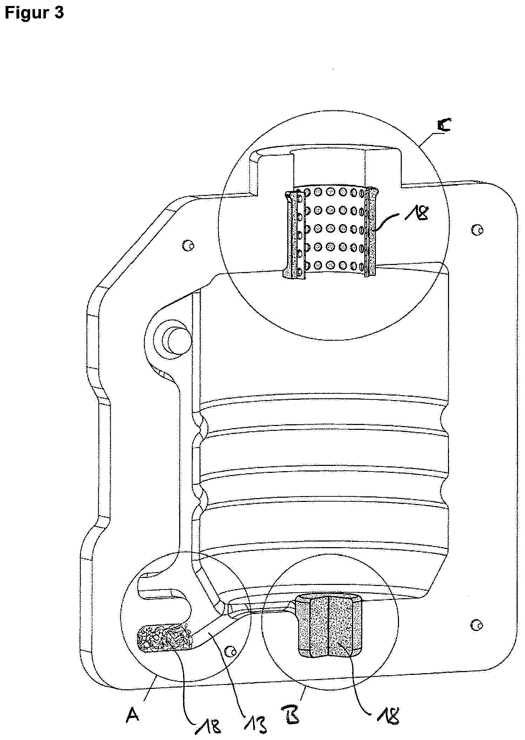

Wie in Figur 3 dargestellt, wird die Rotationsschmelzform 9 vor dem Befüllen mit der Schmelze in den kritischen Regionen A (Lasche), B (Dom / Stutzen) und C (Einfüllstutzen) jeweils mit einem Einlegeelement 18 versehen, das an den entsprechenden Konturen 13 der Formschalen 10, 11 befestigt wird. Dies ist in der Figur 3 dargestellt, die die erste Formschale 10 zeigt.

Die Einlegeelemente 18 bestehen jeweils aus einem tränkbaren bzw. saugfähigen Material, das in der Lage ist, Schmelze in sich aufzunehmen und zu binden bzw. festzuhalten. Dadurch kommt es in den Bereich A, B und C zu einer lokalen Materialansammlung, die dafür sorgt, dass in diesen kritischen Bereichen mehr Material festgehalten wird und auspolymerisiert. Wandstärken können unter Verwendung des Einlegelements 18 gezielt eingestellt werden.

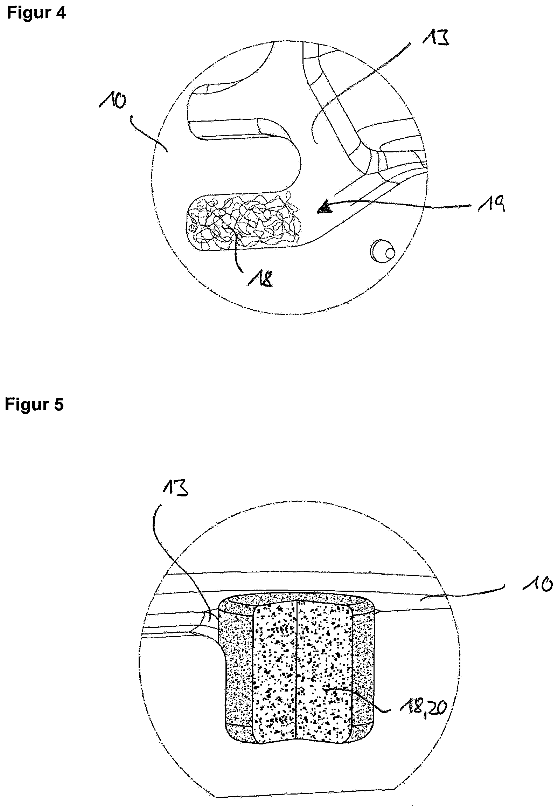

Im Bereich A (Figur 4) ist in der Formschale 10 die Kontur 13 der Lasche eines Flüssigkeitsbehälters ausgebildet. Ist die Rotationsschmelzform geschlossen, bildet sich eine Engstelle in Richtung des Pfeils 19. Kommt es bei der Polymerisation zu früh zu einer Brückenbildung, die die Engstelle im Eingangsbereich verschließt, ist die Ausformung unvollständig. Ein Einlegeelement 18 aus einem Textil, wie Vlies, Gewebe, Gestricke oder dergleichen, ist in die Engstelle 19 gestopft. Die Flexibilität dieses Materials garantiert, dass auch komplizierte Formen durch das Einlegeelement erreicht werden können.

Im Bereich B (Figur 5) ist in die Kontur 13 der Formschale 10, die den Stutzen eines Flüssigkeitsbehälters ausbilden soll, ein voluminöses Einlegeelement 18 in Form eines Stopfens 20 eingesetzt. Dieser kann z.B. aus einem offenporigen Schaum oder einem Schwamm bestehen. Da sich der Stopfen 20 mit der Schmelze vollsaugt, kommt es im Laufe der Polymerisation zu einer erheblichen Ansammlung an ausgebildetem Kunststoff, und der Kunststoffbehälter weist in diesem Bereich eine besondere Wandstärke und Festigkeit auf.

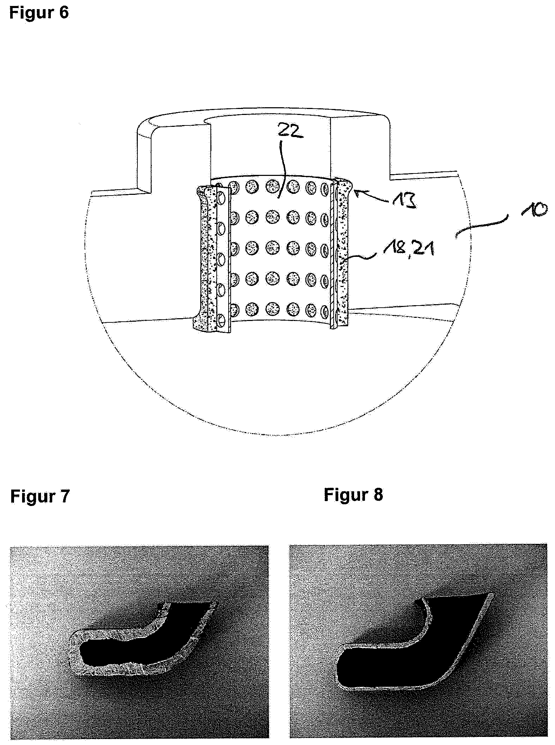

Im Bereich C (Figur 6) ist in die Kontur 13 der Formschale 10, die den Einfüllstutzen eines Flüssigkeitsbehälters ausbilden soll, ein Einlegeelement 18 in Form eines Rings 21 eingesetzt, der an der Kontur 13 anliegt. Ein gitterartiges Rohrelement 22 liegt innenseitig an dem Ring 21 an. Während der Rotationsformung wird das Rohrelement 22 in den polymerisierten Kunststoff eingebettet und integral in der Wand des Kunststoffbehälters verankert. Der Ring 21 besteht ebenfalls aus einem saugfähigen bzw. tränkbaren Material, vorzugsweise aus einem offenporigen Schaum, der eine Wandstärkenerhöhung im Bereich des Einfüllstutzens bewirkt.

Wie die Figur 6 zeigt, können die Einlegeelemente 18 effektiv dazu genutzt werden, Einlegeteile, wie das Rohrelement 22, in der Behälterwand zu verankern, so dass diese effektiver in die Behälterwand eingeschmolzen werden, was die Gefahr von Leckage bei derartigen Bauteilen erheblich mindert.

### Beispiel (A)

Gemäß einer bevorzugten Ausführungsform zur Herstellung eines Kraftstofftanks werden in zwei getrennten Behältern Vormischungen aus ε-Caprolactam mit 0,6 Gew.-% Natrium-Caprolactamat als Katalysator bzw. ε-Caprolactam mit 0,9 Gew.-% Hexamethylen-1,6-bis-carbamido-caprolactam als Aktivator aufgeschmolzen und bei 100 °C vorgehalten. Die Behälter mit den beiden Vormischungen sind über Leitungen mit einem Mischkopf verbunden, von dem eine weitere Leitung abgeht, die an ihrem Ende mit einer Einspritzvorrichtung versehen ist. Der Mischkopf, die Leitungen zwischen den Behältern mit den Vormischungen und dem Mischkopf, sowie die Leitung vom Mischkopf zur Einspritzvorrichtung sind beheizbar und werden auf 100 °C gehalten.

Ein Rotationswerkzeug, welches die Form eines Kraftstoffbehälters eines Motorrads haben kann, wird im Bereich einer Befestigungslasche des späteren Motorradtanks mit einem saugfähigen oder tränkbaren Material in Form eines Gewebes aus Polyamid 6.6 versehen, indem das Gewebe zunächst gerollt und dann in den für die Anformung der Befestigungslasche zuständigen Teil des Werkzeugs gestopft wird. Das Rotationswerkzeug ist mit einer Belüftungsvorrichtung versehen, die den Druck im Werkzeug auf Atmosphärendruck hält. Das Rotationswerkzeug wird in einem Ofen auf 160 °C vortemperiert. Die beiden Vormischungen werden zu gleichen Gewichtsanteilen im Mischkopf zu einer Reaktionsmischung vereinigt und durchmischt, und eine erste Teilmenge (2200 g) der Reaktionsmischung wird innerhalb von 20 Sekunden dem Rotationswerkzeug zugeführt. Das Rotationswerkzeug wird in einem auf 205 °C gehaltenen Ofen langsam biaxial rotiert, so dass das Reaktionsgemisch mit jedem Teil der Werkzeuginnenoberfläche in Kontakt kommt und sich auf der Innenoberfläche ablagert. Nach 200 Sekunden wird die Rotation unterbrochen, um dem Werkzeug eine zweite Teilmenge (2200 g) der Reaktionsmischung zuzuführen. Anschließend wird das Werkzeug bei weiterer Beheizung für 180 Sekunden langsam biaxial rotiert, bevor es unter Beibehaltung der Rotation in einer Kühlkammer auf 70°C abgekühlt wird. Das Rotationswerkzeug wird geöffnet, und das Formteil in Form eines Motorradtanks wird entnommen.

Der Motorradtank wird im Bereich der Befestigungslasche zerschnitten, und die Wandstärke wird gemessen. Es werden Werte zwischen 3,5 mm und 5,9 mm ermittelt. Fig. 7 zeigt einen Schnitt durch die Befestigungslasche des erfindungsgemäß hergestellten Formteils.

### Vergleichsbeispiel (B)

Ein zweiter Motorradtank wird auf herkömmliche Weise hergestellt. Die Vorgehensweise folgt dem für das Beispiel (A) erläuterten Ablauf, wobei das Rotationswerkzeug jedoch in dem Bereich einer Befestigungslasche des späteren Motorradtanks nicht mit einem saugfähigen oder tränkbaren Material versehen wird.

Nach Entnahme aus dem Werkzeug wird der Motorradtank im Bereich der Befestigungslasche zerschnitten, und die Wandstärke wird gemessen. Es werden Werte zwischen 0,8 mm und 2,0 mm ermittelt. Fig. 8 zeigt einen Schnitt durch die Befestigungslasche des nach dem Stand der Technik hergestellten Formteils.

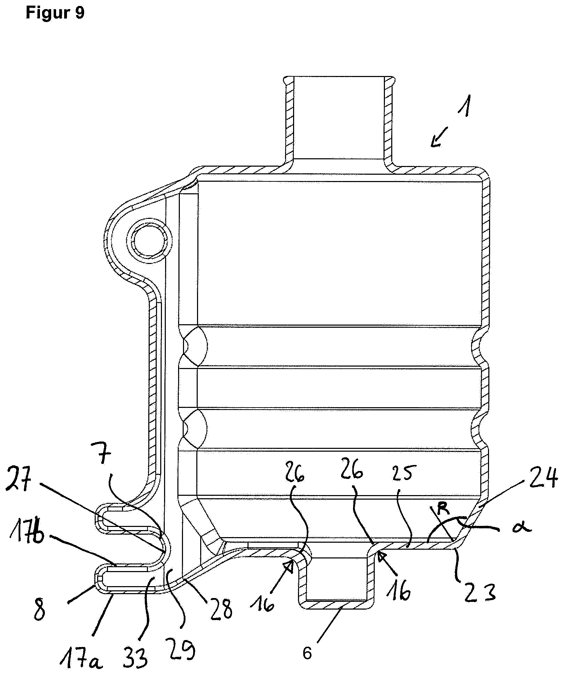

Figur 9 zeigt noch einmal den Behälter 1 aus Figur 1. Das Bezugszeichen 23 kennzeichnet eine Außenkante des Behälters 1, wobei angrenzende Wände 24 und 25 des Behälters 1 unter einem Winkel α zueinander verlaufen. Auf der Innenseite des Behälters 1 besitzt die Kante 23 eine konkave Kontur mit einem Außenradius R. Die Seitenwände 24 und 25 verlaufen unter einem stumpfen Winkel α größer 90° zueinander, so dass der Übergang zwischen den Wänden 24 und 25 vergleichsweise flach bzw. fließend ist und sich beim Rotationsformprozess ausreichend Material hier ansammeln kann.

Im Übergangsbereich 16 besitzt die Wandung des Behälters 1 eine nach innen gewölbte Kontur mit einem Innenradius 26, der in den Stutzen 6 übergeht. Der Innenradius 26 umgibt das obere Ende des Stutzens 6 als umlaufende Kante. Dieser kritische Bereich, der sich insbesondere durch eine in Bezug auf das Innere des Formteils konvexe Kontur der Wandung des Behälters auszeichnet, wird durch den Einsatz des Einlegeelements (Figur 3) effektiv verstärkt.

Im Bereich der Lasche 8 ist erkennbar, dass die parallelen Seitenwandabschnitte 17a und 17b eine Engstelle 33 ausbilden, wobei die angrenzenden Seitenwandabschnitte 27 und 28 sich zunächst einander annähern und dann in die parallelen Seitenwandabschnitte 17a bzw. 17b übergehen. Der Seitenwandabschnitt 27 wird durch einen nach innen ragenden und freistehenden Abschnitt der Seitenwand 7 gebildet, der in einen nach innen gewölbten Abschnitt (Innenradius) endet. Im Eingangsbereich 29 der Engstelle 33 verjüngt sich der Innenraum des Behälters zur Engstelle 33 hin. Wie die Figur 3 auch deutlich zeigt, ist im entsprechenden Bereich der Formschale 10 (Region A) ebenfalls eine Verjüngung der Innenkontur vorgesehen, die in eine entsprechende Engstelle (ähnlich einem Sackloch) führt. Durch die Anordnung des Einlegelements 18 in der entsprechenden Engstelle des Werkzeugs (vgl. Figur 3) wird bei der Rotation des Werkzeugs eine gewisse Menge an Kunststoffvorläufer im Laschenbereich festgehalten, wodurch die Wandstärke des Formteils in diesem Laschenbereich deutlich erhöht wird (vgl. Figur 7 vs. Figur 8). Zusätzlich kann die Rotationsschmelzform in dem Bereich, der den konvex nach innen vorstehenden Seitenwandabschnitt 27 ausbildet (vgl. Figur 3, Region A) zusätzlich mit einem Einlegeelement versehen werden, um sicherzustellen, dass auch im Bereich dieses Innenradius eine ausreichende Wandstärke ausgebildet wird.

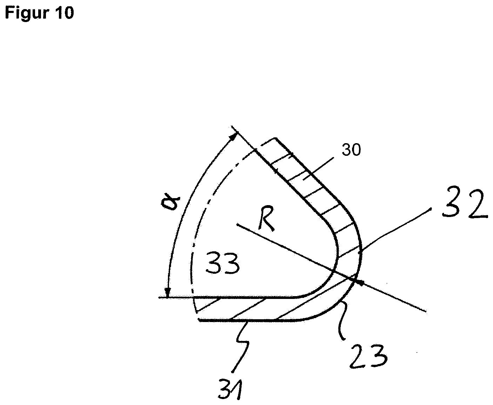

Figur 10 zeigt eine Engstelle 33 in einem Abschnitt eines Behälters, die im Bereich einer Außenkante 23 des Behälters auftritt. Anders als in Figur 9, wo die Seitenwände 24 und 25 in einem stumpfen Winkel ineinander übergehen, stellt die Figur 10 eine Situation dar, in der zwei aneinandergrenzende Seitenwände 30, 31 in einem spitzen Winkel α von ungefähr 45° zueinander verlaufen. Im Übergangsbereich weist die Wandung des Formteils bezogen auf das Innere des Formteils einen Außenradius 32 auf. Die Kontur des Formteils ist hier bezogen auf das Innere des Formteils konkav bzw. in Richtung zur Außenseite gewölbt. Die innere Kontur der entsprechenden Rotationsschmelzform ist entsprechend konturiert. Je spitzer der Winkel α und je kleiner der Außenradius 32, desto größer ist die Gefahr einer Lunkerbildung und der unzureichenden Ausformung in diesem Bereich. Durch den gezielten Einsatz eines Einlegelements kann der Kunststoffvorläufer auch in einem derartigen kritischen Bereich gezielt in der Engstelle festgehalten werden. Im Fall α = 0 geht die in Figur 10 dargestellte Situation über in eine Situation gemäß Figur 9 (vgl. Lasche 8 mit Seitenawandabschnitten 17a und 17b). Es liegen dann im Werkzeug parallele Wandabschnitte vor, die bei hinreichend kleinem Außenradius 32 (z.B. R ≤ 3·d_{N}, insbesondere R ≤ 2·d_{N}) einen kleinen Abstand voneinander haben und ebenfalls eine Engstelle darstellen.

### Bezugszeichenliste

- 1: Kunststoffbehälter
- 2: Innenraum
- 3: Seitenwände
- 4: Einfüllstutzen
- 5: Bodenbereich
- 6: Stutzen / Dom
- 7: seitliche Außenwand
- 8: Lasche
- 9: Rotationsschmelzform
- 10: Formschale
- 11: Formschale
- 12: Kante / Werkzeugflansch
- 13: Kontur
- 14: Einfüllöffnung
- 15: Übergangsbereich
- 16: Übergangsbereich
- 17a,b: parallele Seitenwände
- 18: Einlegeelement
- 19: Engstelle
- 20: Stopfen
- 21: Ring
- 22: Rohrelement
- 23: Außenkante
- 24: Wand
- 25: Wand
- 26: Innenradius
- 27: Wandabschnitt
- 28: Wandabschnitt
- 29: Eingangsbereich
- 30: Seitenwand
- 31: Seitenwand
- 32: Außenradius
- 33: Engstelle

- α: Winkel zwischen angrenzenden Seitenwänden
- R: Radius

## Patentansprüche

1. Verfahren zur Herstellung eines Formteils (1), insbesondere Behälters, aus Kunststoff durch Rotationsformen, wobei ein Kunststoffvorläufer des für das Kunststoffformteil (1) vorgesehenen Kunststoffs in eine Rotationsschmelzform (9) eingebracht wird, wobei der Kunststoffvorläufer als Schmelze in der Rotationsschmelzform (9) vorliegt und unter Rotation der Rotationschmelzform (9) bei gleichzeitiger Formgebung auspolymerisiert, wobei die Formwandung der Rotationsschmelzform im Bereich eines Innenradius (26) in das Innere der Rotationsschmelzform (9) hineinragt und/oder die Rotationsschmelzform (9) eine Engstelle (19, 33) aufweist, wobei das Verfahren die folgenden Schritte umfasst:
a) Einsetzen eines Einlegeelements (18) aus einem saugfähigen und/oder tränkbaren Material in die Rotationschmelzform (9);
b) Einbringen des Kunststoffvorläufers in die Rotationsschmelzform (9);
c) Versetzen der Rotationsschmelzform (9) in Rotation, so dass ein Teil der Schmelze von dem Einlegeelement (18) aufgenommen wird, so dass die Wandstärke des fertigen Formteils in dem Bereich, in dem das Einlegeelement (18) angeordnet ist, erhöht wird,
**dadurch gekennzeichnet, dass** das Einlegeelement (18)
- im Bereich eines Innenradius (26), in dem die Formwandung der Rotationsschmelzform (9) in das Innere der Rotationsschmelzform (9) hineinragt, und/oder in einer Engstelle (19, 33) der Rotationsschmelzform (9) eingesetzt wird, oder
- in einem Bereich der Formwandung der Rotationsschmelzform (9) mit sich verringernden Wandabständen eingesetzt wird, oder
- an einem zum Inneren der Rotationsschmelzform (9) hin gewölbten Abschnitt oder einer nach innen gerichteten Kante der Formwandung der Rotationsschmelzform (9) positioniert wird.

2. Verfahren nach Anspruch 1, **dadurch gekennzeichnet, dass** der Kunststoffvorläufer als flüssige Schmelze in die Rotationsschmelzform (9) eingebracht wird.

3. Verfahren nach Anspruch 1 oder 2, **dadurch gekennzeichnet, dass** die Schmelze eine vorzugsweise niedrigviskose Monomer-, Oligomer- und/oder Präpolymerschmelze ist oder Monomere, Oligomere und/oder Präpolymere enthält.

4. Verfahren nach Anspruch 1, **dadurch gekennzeichnet, dass** der Kunststoffvorläufer in fester Form in die Rotationsschmelzform (9) eingebracht und in der Rotationsschmelzform (9) unter Einbringen von Wärme aufgeschmolzen wird.

5. Verfahren nach einem der vorhergehenden Ansprüche, **dadurch gekennzeichnet, dass** die Polymerisation des Kunststoffvorläufers unterhalb der Schmelztemperatur des fertigen Kunststoffs durchgeführt wird.

6. Verfahren nach einem der vorhergehenden Ansprüche, **dadurch gekennzeichnet, dass** das Einlegeelement (18) einen vorzugsweise offenporigen Schaum und/oder einen Schwamm umfasst.

7. Verfahren nach einem der vorhergehenden Ansprüche, **dadurch gekennzeichnet, dass** das Einlegelement (18) derart ausgebildet ist, dass es sich während der Polymerisation des Kunststoffes auflöst.

8. Verfahren nach einem der vorhergehenden Ansprüche, **dadurch gekennzeichnet, dass** die Rotation der Rotationsschmelzform (9) zumindest in einer Rotationsachse zumindest zeitweise derart unterbrochen wird, dass das Einlegeelement (18) an einem tiefsten Punkt der Rotationsschmelzform (9) und/oder unter einem Pegel der Schmelze zum Liegen kommt.

9. Verfahren nach einem der vorhergehenden Ansprüche, **dadurch gekennzeichnet, dass** in einem Schritt d) die Rotationsschmelzform (9) angehalten, mit einem weiteren Kunststoffvorläufer oder einem weiteren Kunststoffmaterial befüllt und wieder in Rotation versetzt wird.

10. Verfahren nach einem der vorhergehenden Ansprüche, **dadurch gekennzeichnet, dass** es sich bei dem ausgeformten Kunststoff um ein Thermoplast handelt.

11. Formteil (1), **dadurch gekennzeichnet, dass** es nach einem Verfahren nach einem der vorhergehenden Ansprüche hergestellt ist.

12. Formteil nach Anspruch 11, **dadurch gekennzeichnet, dass** das Formteil ein Kunststoffhohlkörper, insbesondere ein Behälter und/oder ein Tank ist.

## Claims

1. A method for the production of a molded part (1), especially a container, made of plastic by means of rotational molding, whereby a plastic precursor of the plastic intended for the plastic molded part (1) is placed into a rotational melt mold (9), whereby the plastic precursor is present in the form of a melt in the rotational melt mold (9) and, while the rotational melt mold (9) is rotating, the melt polymerizes and is simultaneously shaped, whereby the wall of the rotational melt mold, in the area of an inner radius (26), projects into the interior of the rotational melt mold (9) and/or the rotational melt mold (9) has a constriction (19, 33), whereby the method comprises the following steps:
a) placing an insert element (18) made of an absorbent and/or saturable material into the rotational melt mold (9);
b) placing the plastic precursor into the rotational melt mold (9);
c) causing the rotational melt mold (9) to rotate, so that a part of the melt is picked up by the insert element (18), so that the wall thickness of the finished molded part is increased in the area where the insert element (18) is arranged,
**characterized in that** the insert element (18)
- is inserted in the area of an inner radius (26) where the wall of the rotational melt mold (9) projects into the interior of the rotational melt mold (9), and/or into a constriction (19, 33) of the rotational melt mold (9), or
- is inserted in an area of the wall of the rotational melt mold (9) that is at a diminishing distance from the mold wall, or
- is positioned on a section curved towards the interior of the rotational melt mold (9) or on an edge of the wall of the rotational melt mold (9) facing inwards.

2. The method according to claim 1, **characterized in that** the plastic precursor is placed into the rotational melt mold (9) in the form of a liquid melt.

3. The method according to claim 1 or 2, **characterized in that** the melt is a preferably low-viscosity monomer, oligomer and/or prepolymer melt, or comprises monomers, oligomers and/or prepolymers.

4. The method according to claim 1, **characterized in that** the plastic precursor is placed into the rotational melt mold (9) in solid form and melted in the rotational melt mold (9) under the application of heat.

5. The method according to one of the preceding claims, **characterized in that** the polymerization of the plastic precursor is carried out below the melting temperature of the finished plastic.

6. The method according to one of the preceding claims, **characterized in that** the insert element (18) comprises a preferably open-cell foam and/or a sponge.

7. The method according to one of the preceding claims, **characterized in that** the insert element (18) is configured in such a way that it dissolves during the polymerization of the plastic.

8. The method according to one of the preceding claims, **characterized in that** the rotation of the rotational melt mold (9) is interrupted in at least one axis of rotation, at least at times, in such a way that the insert element (18) comes to lie at a lowest point of the rotational melt mold (9) and/or below a level of the melt.

9. The method according to one of the preceding claims, **characterized in that**, in a step d), the rotational melt mold (9) is stopped, filled with another plastic precursor or another plastic material, and once again made to rotate.

10. The method according to one of the preceding claims, **characterized in that** the shaped plastic is a thermoplastic.

11. A plastic molded part (1), produced by means of a method according to one of the preceding claims.

12. The molded part (1) according to claim 11, **characterized in that** the molded part (1) is a plastic hollow body, especially a container and/or a tank.

## Revendications

1. Procédé pour la fabrication d'une pièce moulée (1), en particulier d'un récipient en plastique par roto-moulage, dans lequel un prépolymère du plastique prévu pour la pièce moulée en plastique (1) est introduit dans un moule à fusion rotatif (9), dans lequel le prépolymère se présente sous la forme d'une matière fondue dans le moule à fusion rotatif (9), et celui-ci est polymérisé avec la rotation du moule à fusion rotatif (9) et moulé simultanément, dans lequel la paroi de moule du moule à fusion rotatif pénètre à l'intérieur du moule à fusion rotatif (9) dans la région d'un rayon intérieur (26) et/ou le moule à fusion rotatif (9) présente un rétrécissement (19, 33), le procédé comprenant les étapes suivantes :
a) insertion d'un élément d'insertion (18) constitué d'un matériau absorbant et/ou imprégnable dans le moule à fusion rotatif (9) ;
b) intégration du prépolymère dans le moule à fusion rotatif (9) ;
c) mise en rotation du moule à fusion rotatif (9), de manière à ce qu'une partie de la matière fondue soit reçue par l'élément d'insertion (18), de telle façon que l'épaisseur de paroi de la pièce moulée finie est agrandie dans la région où se trouve l'élément d'insertion (18),
**caractérisé en ce que** l'élément d'insertion (18)
- est inséré dans la région d'un rayon intérieur (26) dans laquelle la paroi de moule du moule à fusion rotatif (9) pénètre à l'intérieur du moule à fusion rotatif (9), et/ou dans un rétrécissement (19, 33) du moule à fusion rotatif (9), ou
- est inséré dans une région de la paroi de moule du moule à fusion rotatif (9) avec des espacements de paroi réduits, ou
- est positionné au niveau d'une section voûtée vers l'intérieur du moule à fusion rotatif (9) ou d'un bord de la paroi de moule du moule à fusion rotatif (9) tourné vers l'intérieur.

2. Procédé selon la revendication 1, **caractérisé en ce que** le prépolymère est introduit en tant que matière fondue liquide dans le moule à fusion rotatif (9).

3. Procédé selon la revendication 1 ou 2, **caractérisé en ce que** la matière fondue est une matière fondue de monomère, d'oligomère et/ou de prépolymère, de préférence à faible viscosité ou contient des monomères, des oligomères et/ou des prépolymères.

4. Procédé selon la revendication 1, **caractérisé en ce que** le prépolymère est introduit sous une forme solide dans le moule à fusion rotatif (9) et fondu dans le moule à fusion rotatif (9) en appliquant de la chaleur.

5. Procédé selon l'une des revendications précédentes, **caractérisé en ce que** la polymérisation du prépolymère est réalisée en dessous de la température de fusion du plastique fini.

6. Procédé selon l'une des revendications précédentes, **caractérisé en ce que** l'élément d'insertion (18) comporte une mousse et/ou une éponge, de préférence à pores ouverts.

7. Procédé selon l'une des revendications précédentes, **caractérisé en ce que** l'élément d'insertion (18) est conçu de manière à se dissoudre pendant la polymérisation du plastique.

8. Procédé selon l'une des revendications précédentes, **caractérisé en ce que** la rotation du moule à fusion rotatif (9) est interrompue au moins temporairement dans un axe de rotation, de telle façon que l'élément d'insertion (18) vient se placer au point le plus bas du moule à fusion rotatif (9) et/ou en dessous d'un niveau de la matière fondue.

9. Procédé selon l'une des revendications précédentes, **caractérisé en ce que** dans une étape d) , le moule à fusion rotatif (9) est arrêté, rempli avec un autre prépolymère ou une autre matière plastique puis remis en rotation.

10. Procédé selon l'une des revendications précédentes, **caractérisé en ce que** le plastique moulé est une matière thermoplastique.

11. Pièce moulée (1), **caractérisée en ce que** celle-ci est fabriquée à l'aide d'un procédé selon l'une des revendications précédentes.

12. Pièce moulée selon la revendication 11, **caractérisée en ce que** la pièce moulée est un corps creux en plastique, en particulier un récipient et/ou un réservoir.
